# EUROPEAN PATENT APPLICATION

(11) **EP 0 648 460 A1**
(43) Date of publication of application: **19.04.1995**
(21) Application number: 93810722.4
(22) Date of filing: 14.10.1993
(51) Int. Cl.: A47J 37/07

(54) **Portable barbecue grill**

(71) Applicant: Home, William, Taipei (TW)
(72) Inventor: Home, William, Taipei (TW)
(74) Representative: Feldmann, Paul David

(57) **Abstract**

A collapsible barbecue grill including an oven (4) mounted on a stand (6) comprising a top rack (12), a first pair of legs (16) pivotally linked to the top rack (12) by means of a pair of L-shaped knuckles (20), a second pair of legs (18) pivotally linked to the top rack (12) by means of a pair of L-shaped knuckles (20), four L-shaped brackets each attached to one of the legs and a bottom rack (15) mounted on the L-shaped brackets. The first pair of legs (16) comprises a telescopic configuration.

## Description

### BACKGROUND OF INVENTION

### FIELD OF INVENTION

The present invention relates to a collapsible barbecue grill.

### RELATED PRIOR ART

Barbecue grills are very popular in countries all over the world where people want to enjoy the special flavor of barbecued food. Many people have collapsible barbecue grills which can be wheeled to different areas such as a patio of a house or a picnic site in the countryside.

However, in order to store or transport the grill, it is preferred that it can be collapsed to occupy less space. And further, when it is in a collapsed mode, it is desired that the grill can be maneuvered easily by means of useful handles appropriately located thereon. It is also further found that locking devices to secure the legs in both open and retracted positions are necessary for safe and practical operation. Thus, there has been a long and unfulfilled need for a collapsible barbecue grill in which there are foldable legs which can be secured by locking devices and at least two separate handles to maneuver the grill easily.

### SUMMARY OF INVENTION

The present invention provides a collapsible barbecue grill including an oven mounted on a stand comprising a top rack, a first pair of legs pivotally linked to the top rack by means of a pair of L-shaped knuckles, a second pair of legs pivotally linked to the top rack by means of a pair of L-shaped knuckles, four L-shaped brackets each attached to one of the legs and a bottom rack mounted on the L-shaped brackets. The first pair of legs comprising a telescopic configuration. Each L-shaped knuckle cooperates with a corresponding sprung loaded element received inside the top rack whereby each leg may be locked in an extended position. Each L-shaped knuckle comprises a sleeve and two arms perpendicularly extending from the sleeve. The arms are pivotally linked to the top rack. Each leg is inserted in the sleeve of a corresponding L-shaped knuckle. One of the arms of each L-shaped knuckle has a hole formed therein for receiving a latch projecting from a corresponding sprung loaded element. Two wheels are mounted an axle attached to the second pair of wheels. The bottom rack comprises four dowels attached to the underside thereof and each L-shaped bracket comprises a hole formed therein. The dowels attached to the bottom rack are insertable in the holes formed in the L-shaped brackets in order to retain the bottom rack on the L-shaped brackets.

Further, the second pair of legs can also be pivoted upwards and also be attached to the underside of the stand. By means of the second handle and with both pairs of legs folded beneath the stand, the maneuverability and storability are further enhanced.

### BRIEF DESCRIPTION OF THE DRAWINGS

Fig. 1 is a perspective view of a first embodiment of a collapsible barbecue grill according to this invention;
Fig. 2 is a side view of a collapsible barbecue grill in a first position according to the present invention;
Fig. 3 is a view similar to Fig. 2 except for showing the collapsible barbecue grill in a second position;
Fig. 4 is a view similar to Fig. 3 except for showing the collapsible barbecue grill in a third position;
Fig. 5 is a view similar to Fig. 4 except for showing a cover of the oven separated from the oven;
Fig. 6 is a partial cross-sectional view taken along a line 6-6 in Fig. 5;
Fig. 7 is a partial front view of a connection between a leg and a lower rack; and
Fig. 8 is a perspective view of a second embodiment of a collapsible barbecue grill according to this invention.

### DETAILED DESCRIPTION OF PREFERRED EMBODIMENT

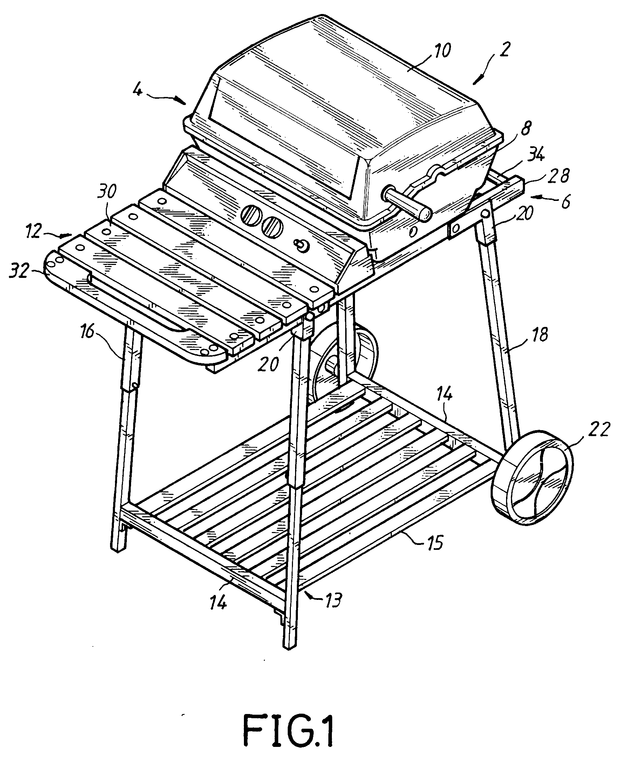

Referring to Fig. 1, a collapsible barbecue grill 2 comprises an oven 4 and a stand 6.

The oven 4 comprises a base 8 and a cover 10.

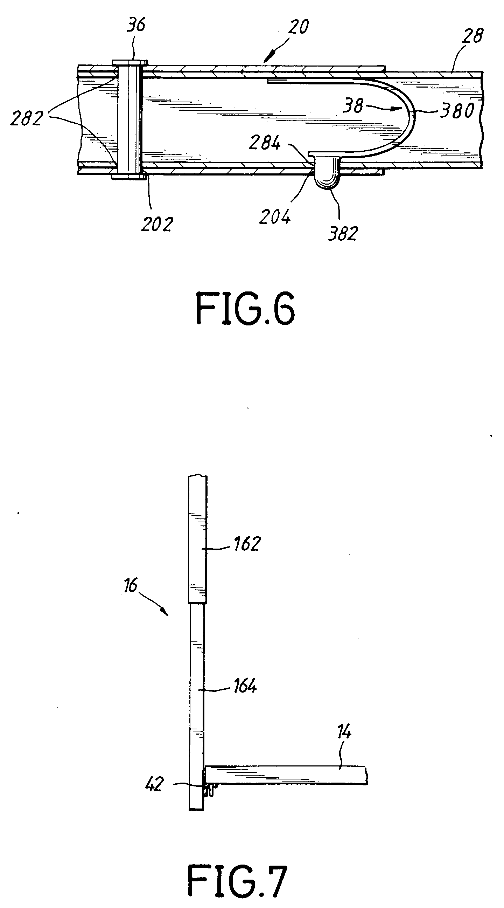

The stand 6 includes a top rack 12, two legs 16 each pivotally attached to the top rack 12 by means of a pair of L-shaped knuckle 20, two legs 18 each pivotally attached to the top rack 12 by means of a pair of L-shaped knuckle 20, two wheels 22 each rotatably attached to one of the legs 18 and a bottom rack 13 detachably mounted on the legs 16 and 18 by means of four L-shaped brackets 40 (see Fig. 7).

The top rack 12 comprises two side rails 28 connected to each other by means of a plurality of cross members 30. A first cross member defines a cutout portion to act as a first handle 32. A final cross member, at an opposite end to the first cross member, defines a second handle 34.

Referring to Figs. 1 and 6, an L-shaped knuckle 20 and a portion of a rail 28 are shown. The L-shaped knuckle 20 has a sleeve and two arms perpendicularly extending from the sleeve. The arms of the L-shaped knuckle 20 extend parallel to each other. The distance between the arms of the L-shaped knuckle 20 is just greater than the width of the rail 28 in order to permit the rail 28 to move between the arms.

Each arm has a hole 202 formed therethrough near a first distal edge thereof. The related portion of the rail 28 has two holes 282 transversely formed therethrough in order to receive a retaining means, such as a rivet 36. The pin 36 is inserted through the holes 202 and further through the holes 282 so that the L-shaped knuckle 20 is pivotally attached to the rail 28.

One of the arms has a hole 204 formed therethrough near a second distal edge thereof. The sprung loaded element 38 consisting of a leaf spring 380 and a latch 382 is mounted in the related portion of the rail 28. The leaf spring 380 has a first tip which is secured to the related portion of the rail 28 and a second tip perpendicularly from which a latch 382 projects. The leaf spring 380 is curved in order to bias the latch 382 away from the first tip thereof. When the hole 204 aligns to the hole 284, the latch 382 is biased by means of the leaf spring 380 into the holes 204 and 284 so as to lock the L-shaped knuckle 20 relative to the rail 28. To release the locking effect, the latch is pushed inward by a user's finger toward the first tip of the leaf spring 380.

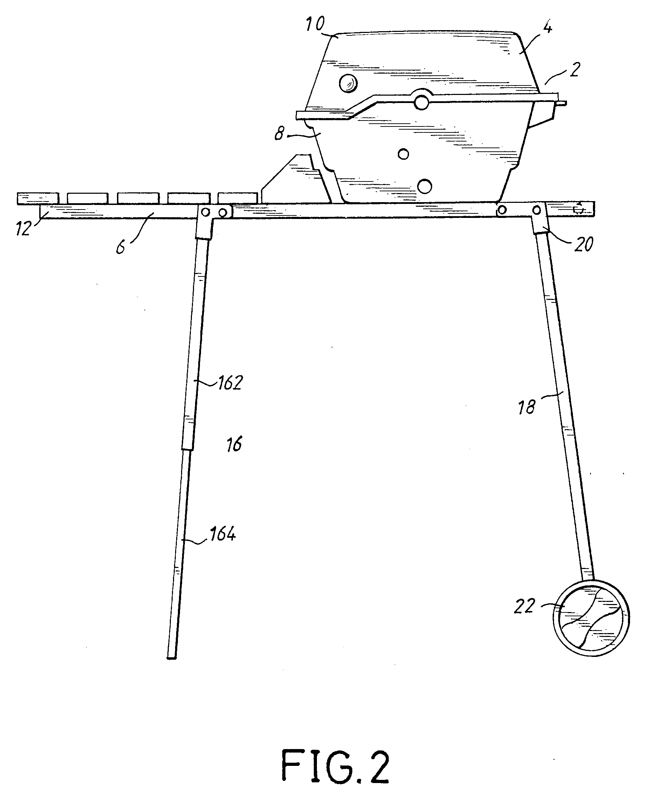

Referring to Fig. 2, the bottom rack 13 is detached. Each leg 16 has an upper tube 162 wherein a lower tube 164 is telescopically received. The upper tube 162 is secured in the sleeve of a corresponding L-shaped knuckle 20. A sprung loaded element, which is similar to the sprung loaded element 38, is arranged in the leg 16 in order to lock the leg 16 in the extended position.

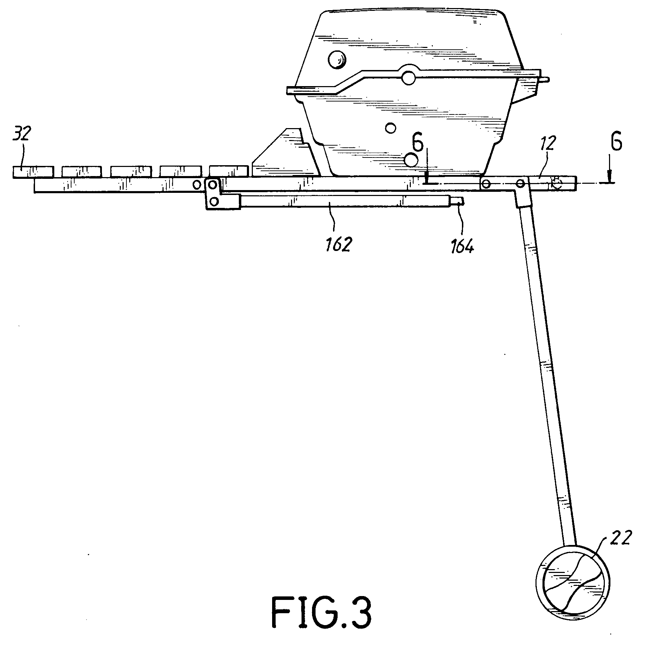

Referring to Figs. 3, by releasing the locking effect of the sprung loaded elements 38 at the first ends of the legs 16, the lower tubes 164 are retractable into the upper tubes 162. When the user grasps the first handle means 32, the legs 16 can be swung upwards toward the underside of the rack 12 by releasing the locking effect of the sprung loaded elements arranged therein.

Referring to Fig. 1, the legs 18 each have a second end with a through hole (not shown) transversely extending through both walls. An axle (not shown) extends through the holes formed through the second ends of the legs 18 and protrudes outwardly beyond the legs 18. Two wheels 22 are each mounted one of the protruding ends of the axle.

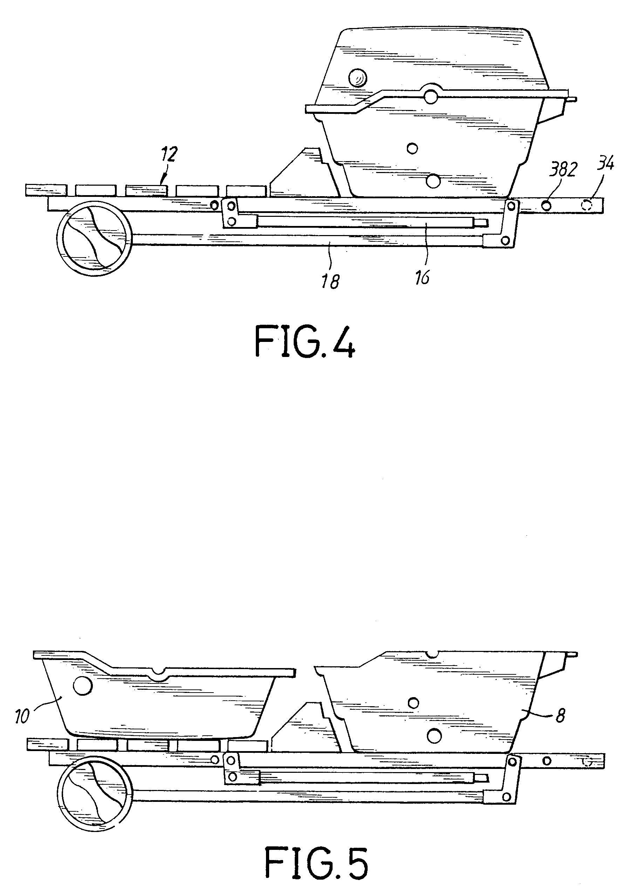

As shown in Fig. 4, the legs 16 are retracted and swung upwards to the underside of the top rack 12. The locking effect of the sprung loaded elements 38 at the top of the legs 18 are released by a user's finger depressing latch 382 to allow the legs 18 to move toward the underside of the top rack 12. The user can then grasp the second handle means 34 to maneuver easily the barbecue grill 2.

Referring to Fig. 5, the cover 10 of the oven is moved from the base 8 of the oven. In this position, the barbecue grill occupies little space, i.e., it can be stored easily.

Referring to Figs. 1 and 7, the bottom rack 13 has two cross members 14 linked to each other by means of a plurality of rails 15. Two L-shaped brackets 40 are each attached to one of the lower tubes 164 so that the L-shaped brackets 40 face each other. Two L-shaped brackets 40 are each attached to one of the legs 18 so that the L-shaped brackets 40 face each other. Each L-shaped bracket 40 has first and second portions extending perpendicular to each other. The first portions of the L-shaped brackets 40 are attached to the legs 16 and 18. A hole is formed through the second portion of each L-shaped bracket 40. Two dowels 42 are attached on the underside of each cross member 14. The dowels 42 are inserted through the holes formed through the L-shaped brackets 40 in order to retain the bottom rack 13 on the L-shaped brackets 40.

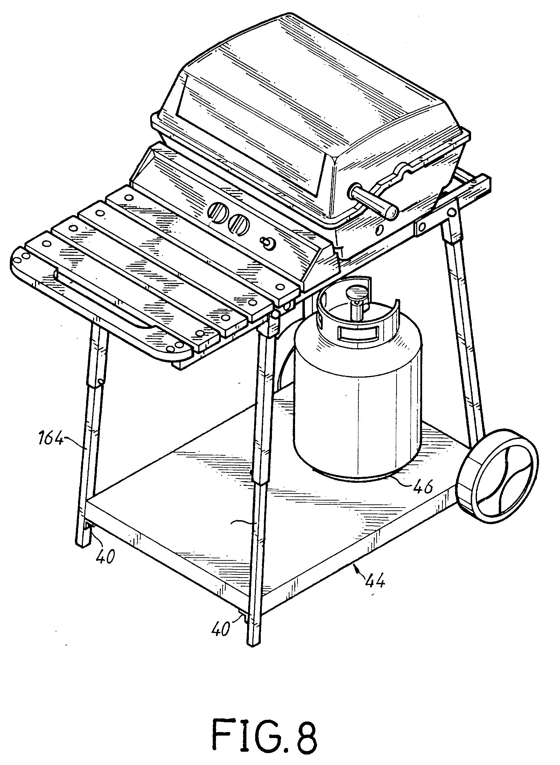

Referring to Fig. 8, in a second embodiment of the collapsible barbecue grill in accordance with the present invention, a bottom rack 44 is a substantially rectangular plate. Four dowels 42 are attached on the underside of the bottom rack 44. The dowels 42 are inserted through the holes formed through the L-shaped brackets 40 so that the bottom rack 44 is mounted on the legs 16 and 18. An opening 46 is formed through the bottom rack 44 in order to receive an tubular flange attached on the bottom of a gas cylinder.

Although the present invention has been explained in relation to its preferred embodiment, it is to be understood that many other possible modifications and variations can be made without departing from the spirit and scope of the invention hereinafter claimed.

## Claims

1. A collapsible barbecue grill comprising an oven mounted on a stand comprising atop rack, a first pair of legs pivotally linked to the top rack by means of a pair of L-shaped knuckles, a second pair of legs pivotally linked to the top rack by means of a pair of L-shaped knuckles, four L-shaped brackets each attached to one of the legs and a bottom rack mounted on the L-shaped brackets, the first pair of legs comprising a telescopic configuration.

2. A collapsible barbecue grill as claimed in claim 1 wherein each L-shaped knuckle cooperates with a corresponding sprung loaded element received inside the top rack whereby each leg may be locked in an extended position.

3. A collapsible barbecue grill as claimed in claim 2 wherein each L-shaped knuckle comprises first and second sections extending perpendicular to each other, the first section being pivotally linked to the top rack, the second section being linked to a corresponding leg.

4. A collapsible barbecue grill as claimed in claim 3 wherein the first section of the L-shaped knuckle comprises a hole formed therein for receiving a latch projecting from the sprung loaded element.

5. A collapsible barbecue grill as claimed in claim 3 wherein the second section of the L-shaped knuckle is a sleeve in which the corresponding leg is inserted.

6. A collapsible barbecue grill as claimed in claim 1 comprising two wheels mounted an axle attached to the second pair of wheels.

7. A collapsible barbecue grill as claimed in claim 1 wherein the bottom rack comprises four dowels attached to the underside thereof and each L-shaped bracket comprises a hole formed therein, the dowels attached to the bottom rack are insertable in the holes formed in the L-shaped brackets in order to retain the bottom rack on the L-shaped brackets.

8. A collapsible barbecue grill as claimed in claim 1 wherein the bottom rack comprises two cross members connected to each other by means of a number of rails.

9. A collapsible barbecue grill as claimed in claim 1 wherein the bottom rack is in the form of a rectangular plate with a circular cutout formed therein in order to received a gas cylinder.

10. A collapsible barbecue grill as claimed in claim 1 wherein the top rack comprises two rails connected to each other by means of a plurality of cross members.

11. A collapsible barbecue grill as claimed in claim 10 comprising a first handle attached to the first ends of the rails.

12. A collapsible barbecue grill as claimed in claim 10 comprising a second handle attached to the second ends of the rails.
